# EUROPÄISCHE PATENTSCHRIFT

(11) **EP 3 655 876 B1**
(45) Veröffentlichungstag und Bekanntmachung des Hinweises auf die Patenterteilung: **16.12.2020**
(21) Anmeldenummer: 18789370.6
(22) Anmeldetag: 16.10.2018
(51) Int. Cl.: G06F 21/76, G06F 21/14, G06F 21/55, G06F 21/71

(54) **EIN-CHIP-SYSTEM, VERFAHREN ZUM BETRIEB EINES EIN-CHIP-SYSTEMS UND KRAFTFAHRZEUG**
SINGLE-CHIP SYSTEM, METHOD FOR OPERATING A SINGLE-CHIP SYSTEM, AND MOTOR VEHICLE
SYSTÈME SUR PUCE, PROCÉDÉ POUR FAIRE FONCTIONNER UN SYSTÈME SUR PUCE ET VÉHICULE À MOTEUR

(30) Priorität: 26.10.2017 DE 102017219242
(43) Veröffentlichungstag der Anmeldung: 27.05.2020
(73) Patentinhaber: Audi AG, 85045 Ingolstadt (DE)
(72) Erfinder: KLEIN, Markus, 85104 Pförring (DE); ZAWADZKI, Kamil, 81827 München (DE); AHN, Changsup, 85057 Ingolstadt (DE); GRUBER, Hans-Georg, 85049 Ingolstadt (DE)
(86) Internationale Anmeldenummer: PCT/EP2018/078215
(87) Internationale Veröffentlichungsnummer: WO 2019/081270

(56) Entgegenhaltungen:
- EP-A1- 1 811 415
- EP-A1- 2 472 408
- WO-A2-2010/117155
- US-A1- 2017 076 116

## Beschreibung

Die Erfindung betrifft ein Ein-Chip-System, aufweisend mehrere Recheneinheiten, insbesondere Rechenkerne und/oder CPUs, wenigstens eine Ein-/Ausgabeeinheit, eine Speichereinheit und eine Ein-/Ausgabe-Steuereinheit, die die Kommunikation zwischen den Recheneinheiten und der wenigstens einen Ein-/Ausgabeeinheit koordiniert. Daneben betrifft die Erfindung ein Verfahren zum Betrieb eines solchen Ein-Chip-Systems sowie ein Kraftfahrzeug.

Ein-Chip-Systeme, oft auch als "System on a Chip" - SoC bekannt, wurden im Stand der Technik bereits vorgeschlagen. Im Allgemeinen werden durch solche Ein-Chip-Systeme mehrere Recheneinheiten, insbesondere Rechenkerne, realisiert, die nebeneinander betreibbar sind, wobei weitere Komponenten des Ein-Chip-Systems Speicherplatz sowie Ein-/Ausgabemöglichkeiten (I/O) bereitstellen bzw. Datenaustausch zwischen den genannten Komponenten realisieren. Ein Beispiel für eine solche, Datenaustausch zwischen Komponenten des Ein-Chip-Systems koordinierende Komponente des Ein-Chip-Systems ist eine Ein-/Ausgabe-Steuereinheit, die die Kommunikation zwischen den Recheneinheiten und der wenigstens einen Ein-/Ausgabeeinheit koordiniert. Letztlich koordiniert eine solche Ein-/Ausgabe-Steuereinheit den Datenfluss über verschiedene Anschlüsse des Ein-Chip-Systems nach innen und nach außen auf Recheneinheiten-Ebene oder auch auf der Ebene virtueller Rechenkomponenten. Hierbei können beispielsweise Rechenleistung bzw. Rechenleistungsanteile verschiedener Recheneinheiten kombiniert werden. Für derartige Ein-/Ausgabe-Steuereinheiten sind verschiedene Begriffe im Stand der Technik bekannt, beispielsweise SMMU (System Memory Management Unit) bei Samsung.

Aufgrund der Flexibilität, Berechnungsgeschwindigkeit und geringen Bauraumanforderungen solcher Ein-Chip-Systeme steigt deren Einsatzgebiet stetig an. Beispielsweise ist es denkbar, auf einem Ein-Chip-System verschiedene Betriebssysteme bereitzustellen, die es ermöglichen, parallel verschiedene Anwendungen durchzuführen; denkbar ist es ferner, verschiedene Sicherheitsstufen/Sicherheitsanforderungen über unterschiedliche Betriebssysteme bzw. Recheneinheiten bzw. Rechenkomponenten abzubilden, so dass beispielsweise unterschiedlichste Funktionen durch ein solches Ein-Chip-System umgesetzt werden können. Mithin wurde auch der Einsatz von Ein-Chip-Systemen in Steuereinheiten von Kraftfahrzeugen bereits vorgeschlagen, wo beispielsweise das Konzept eines sogenannten "zentralen Fahrerassistenzsystems" über wenigstens ein solches Ein-Chip-System umgesetzt werden kann, auf dem dann sowohl weniger sicherheitskritische Funktionen, beispielsweise Multimedia-Funktionen, als auch eher sicherheitskritische Funktionen, beispielsweise auf die Fahrzeugführung bezogene Funktionen, durchgeführt werden können. Für verschiedene dieser Funktionen sind Sicherheitsanforderungen festgelegt, welche durch die Norm ISO 26262 definiert sind. Entsprechend sicherheitskritische Funktionen, denen eine Sicherheitsanforderung, beispielsweise eine ASIL-Stufe, zugeordnet ist, müssen durch hinsichtlich der Norm zertifizierte Komponenten durchgeführt werden, was selbstverständlich auch für Teilkomponenten des Ein-Chip-Systems gilt.

In softwarebasierten Systemen wurden bereits sogenannte "Intrusion Detection Systems" (IDS) vorgeschlagen. Ein IDS wird genutzt, um kompromittierte Systeme zu erkennen und die Möglichkeit bereitzustellen, auf ein kompromittiertes System, das angegriffen wurde, zu reagieren (IPS - Intrusion Prevention System). Ein IDS fügt einem Gesamtsystem mehr Software hinzu und liefert daher zusätzliche Angriffswege, die ebenso hinsichtlich der Sicherheit berücksichtigt werden müssen, wenn eine Risikoanalyse durchgeführt wird. Zusätzlich bringen derartige IDS Leistungseinbußen mit sich, da Rechenleistung für die entsprechenden, das IDS realisierenden Softwaremittel benötigt wird.

In modernen Ein-Chip-Systemen mit mehreren Recheneinheiten werden, insbesondere bei Kombination verschiedener Sicherheitsanforderungen, Sicherheitsmaßnahmen häufig durch eine starke Trennung zwischen Teilsystemen unterschiedlicher Sicherheitsanforderungen umgesetzt. Eine solche Trennung kann durch die Einführung hardwarebasierter Mechanismen, beispielsweise von Wächterseiten (Guard pages) in Speichereinheiten bereitbestellt werden. Ein anderes Beispiel ist eine hardwarebasierte Trennung des Zugriffs auf Speicherbereiche ("Memory Access Control").

IDS werden im Hinblick auf Ein-Chip-Systeme meist nicht eingesetzt, da keine zusätzlichen Angriffswege durch zusätzliche Software eröffnet werden sollen und Leistungseinbußen möglichst vermieden werden sollen. Zudem soll eine Wechselwirkung mit bereits existenten Sicherheitsmechanismen möglichst vermieden werden.

US 2009/0 113 141 A1 betrifft ein Speicherschutzsystem und ein zugehöriges Verfahren. Dabei wird eine Speicherzugriffs-Steuereinheit für geteilten Speicher bereitgestellt, wobei auch eine Erlaubnistabelle bereitgestellt wird, die Lese- und Schreibeerlaubnisse für die Mehrzahl an Recheneinheiten definiert. Ein Speicherfehlerdetektor wird angekoppelt, der einen Eingang zum Empfang von Speicherzugangsanfragen aufweist, wobei durch eine Logik überprüft wird, ob der hierdurch beschriebene Speicherzugang mit der Erlaubnistabelle konfliktieren würde.

Aus EP 1 811 415 A1 ist ein Ein-Chip-System bekannt, welches ein Überwachungsmodul umfasst, das dazu ausgebildet ist, durch Überwachung der Eingangsdaten sowie der Ausgangsdaten einen normalen Arbeitszustand des Ein-Chip-Systems von einem fehlerhaften Betriebszustand aufgrund eines Angriffs zu unterscheiden. Dabei werden als Eingangsdaten durch das Überwachungsmodul über eine Eingangsschnittstelle empfangene Daten überwacht.

US 2017/076116 A1 beschreibt ein Verfahren zur Ermittlung eines die Kommunikation auf einem Datenbus eines Ein-Chip-Systems im normalen Betrieb beschreibenden Modells sowie eine das Modell zur Überwachung der Kommunikation auf dem Datenbus nutzende Vorrichtung. Über eine spezielle Auswerteeinheit wird ein unautorisierter Zugang zu einem Sicherheitsmodul überwacht.

In EP 2 472 408 A1 wird ein Überwachungssystem zur Überwachung eines Datenbusses auf einem Ein-Chip-System beschrieben. Dabei ist die Überwachungseinheit zwischen dem Bus und einer Steuereinheit angeordnet, um den Datenbus zu überwachen.

In WO 2010/117155 A2 wird eine Firewall mit einer Anti-malware-engine beschrieben. Dabei werden von einer externen Quelle an ein Mobilgerät gesendete Daten von einem Überwachungsmodul ausgewertet und klassifiziert.

Der Erfindung liegt die Aufgabe zugrunde, eine Realisierung eines "Intrusion Detection System" (IDS) für ein Ein-Chip-System anzugeben, welche umfassende Detektionsmöglichkeiten bei möglichst sicherer und die Leistungsfähigkeit des Ein-Chip-Systems möglichst wenig beeinflussender Umsetzung erlaubt.

Zur Lösung dieser Aufgabe wird erfindungsgemäß ein Ein-Chip-System gemäß Anspruch 1 vorgeschlagen.

Die Angriffsdetektionseinheit bildet somit einen Teil eines IDS oder sogar eines IDPS (Intrusion Detection and Prevention System). Signale von bevorzugt mehreren Komponenten des Ein-Chip-Systems, umfassend wenigstens die Ein-/Ausgabe-Steuereinheit, werden genutzt und hinsichtlich eines möglichen Angriffs ausgewertet, idealerweise vollkommen unabhängig vom restlichen Betrieb des Ein-Chip-Systems, was es insbesondere ermöglicht, einem Angreifer die Illusion zu geben, seine Tätigkeit sei noch gar nicht festgestellt worden. Es wird also eine zusätzliche Hardware innerhalb des Ein-Chip-Systems hinzugefügt, die wenigstens Hardware-Signalverbindungen von verschiedenen hardwarebasierten Komponenten des Ein-Chip-Systems zu einem abgetrennten IDS umfasst. Die Verwendung eines derart abgetrennten IDS vermeidet die Verwendung reiner, angreifbarer Software, fügt mithin keine neuen Angriffspunkte hinzu, da das IDS über die zusätzlichen, anderweitigen nicht genutzten Hardware-Signalverbindungen arbeitet und mit den sonstigen Recheneinheiten idealerweise nicht empfangend oder angreifbar interagiert. Somit ist auch ein minimaler Einfluss auf existierende Sicherheitsmechanismen gegeben und es ist sichergestellt, dass das IDS selbst in einem sicheren Bereich des Ein-Chip-Systems vorgesehen ist. Die Detektion eines Angriffs bzw. einer Korruption des Ein-Chip-Systems kann nicht hinter einem infizierten, insbesondere bereits übernommenen Teil des Ein-Chip-Systems versteckt werden; die Nutzung getrennter, bevorzugt zusätzlicher Hardware ermöglicht es ferner, dass IDS ohne Einbußen der Rechenleistung der Recheneinheiten umzusetzen.

Der Angriffsdetektionsregelsatz kann, muss aber nicht zwangsläufig, als Teil der Angriffsdetektionseinheit realisiert sein. Denkbar ist es auch, den Angriffsdetektionssatz anderweitig, also dezentral, bevorzugt als Hardware vorzusehen, beispielsweise an den Komponenten, die Eingangsdaten an die Angriffsdetektionseinheit liefern. Eine dezentrale Ausgestaltung des Angriffsdetektionsregelsatzes kann die Rechenleistung, die für die Angriffsdetektionseinheit vorgesehen werden muss, weiter reduzieren.

Mithin sieht eine besonders vorteilhafte Ausgestaltung der vorliegenden Erfindung vor, dass die Angriffsdetektionseinheit als eine eigene Hardwarekomponente des Ein-Chip-Systems realisiert ist, beispielsweise als ein ASIC und/oder eine eigene, zusätzliche Recheneinheit (CPU/Rechenkern). Die Angriffsdetektionseinheit stellt somit eine für die Recheneinheiten unsichtbare Hardwarekomponente dar, die im Hintergrund, unbeeinflusst von sonstigen Vorgängen innerhalb des Ein-Chip-Systems, ihre Überwachung auf Angriffe gemäß des Angriffsdetektionsregelsatzes vornehmen kann. In dieser Variante sind weder zusätzliche Angriffspunkte realisiert, noch ist für einen Angreifer nachvollziehbar, ob sein Angriff bereits festgestellt wurde oder nicht. Ferner sind in dieser bevorzugten Ausgestaltung keinerlei Einbußen hinsichtlich der Rechenleistung des Ein-Chip-Systems gegeben, da auf die diese Rechenleistung definierenden Recheneinheiten keinerlei Einfluss genommen wird, falls nicht, wie noch genauer erläutert werden wird, eine Maßnahme dies erfordert. Dabei ist die Hardware-Signalverbindung bevorzugt als eine speziell für die zu übertragenden Signale ausgelegte, nur in eine Richtung nutzbare Signalleitung ausgebildet.

Eine ähnlich sichere, bevorzugte Variante ist dann gegeben, wenn die Angriffsdetektionseinheit als Teil einer zur Überwachung einer Komponente, insbesondere einer Recheneinheit und/oder einer virtuellen Rechenkomponente, des Ein-Chip-Systems vorgesehenen, als Zusatzrecheneinheit realisierten, insbesondere einen Schattenspeicher analysierenden Inspektionseinheit realisiert ist. Ist also ohnehin eine für die Recheneinheiten "unsichtbare" Zusatzhardware, die äußerst leistungsfähig ist und daher meist als Zusatzrecheneinheit realisiert wird, vorhanden, die eine Recheneinheit und/oder eine Rechenleistung mehrerer Recheneinheiten nutzende virtuelle Rechenkomponente überwacht und welche als Inspektionseinheit bzw. Teil eines Inspektionssystems verstanden werden kann, kann eine derartige versteckte, durch die Recheneinheiten nicht zugreifbare Inspektionseinheit auch genutzt werden, um dort zusätzlich die Angriffsdetektionseinheit des IDS zu realisieren. Eine solche Inspektionseinheit kann insbesondere einen Schattenspeicher (shadow memory) auf unzulässige Zustände und/oder Fehlfunktionen der Recheneinheit und/oder virtuellen Rechenkomponente überprüfen und selbst als weitere Komponente des Ein-Chip-Systems Eingangssignale an die Angriffsdetektionseinheit liefern.

Alternative, weniger bevorzugte Ausgestaltung der vorliegenden Erfindung können vorsehen, dass die Angriffsdetektionskomponente wenigstens eine der Recheneinheiten, insbesondere eine Recheneinheit höchster Sicherheitsstufe, mit einem entsprechenden Softwaremittel umfasst, so dass beispielsweise eine Recheneinheit exklusiv für das IDS bzw. seine Angriffsdetektionskomponente realisiert werden kann. In diesem Fall soll also Rechenleistung, allerdings möglichst ohne Zugriff der anderen Recheneinheiten, abgezweigt werden, was eine Leistungsreduzierung des Ein-Chip-Systems an sich mit sich bringen kann, insbesondere aber auch, abhängig von der Gesamtstruktur des Ein-Chip-Systems, in vielen Fällen Angriffswege öffnen wird, weshalb bevorzugt eine Recheneinheit höchster Sicherheitsstufe, mithin eine die höchsten Sicherheitsanforderungen erfüllende Recheneinheit (und/oder auch virtuelle Rechenkomponente) ausgewählt wird, da davon auszugehen ist, dass im Fall eines Angriffs diese Recheneinheit (bzw. Rechenkomponente) als letztes kompromittiert werden wird. Denkbar ist es in einer anderen, nochmals weniger bevorzugten Alternative auch, dass mehrere Angriffsdetektionskomponenten durch Nutzung mehrerer, insbesondere aller, Recheneinheiten mit entsprechendem Softwaremittel realisiert sind. Dem liegt die Überlegung zugrunde, dass üblicherweise nicht alle Recheneinheiten gleichzeitig kompromittiert werden, so dass in jedem Fall eine Detektion des Angriffs noch ermöglicht wird. Auch gilt selbstverständlich analog, dass eine Nutzung mehrerer, insbesondere aller, virtueller Rechenkomponenten des Ein-Chip-Systems erfolgen kann. Es sei allgemein noch angemerkt, dass solche virtuellen Rechenkomponenten beispielsweise durch einen sogenannten Hypervisor realisiert bzw. definiert werden können, wobei es allerdings in vielen Ein-Chip-Systemen, in denen auch sicherheitskritische Anwendungen, die eine Sicherheitsanforderung gemäß einem Sicherheitsstandard erfüllen sollen, meist nicht möglich ist, zertifizierte Hypervisor-Einheiten zu erhalten, so dass eine weitere Systemtrennung häufig gegeben ist.

Allgemein sei an dieser Stelle noch angemerkt, dass der Angriffsdetektionsregelsatz, der in der Angriffsdetektionseinheit abgelegt bzw. durch diese zugreifbar ist, auch als eine "IDS-Policy" verstanden werden kann. Je nachdem, inwieweit die Eingangssignale bereits seitens der sendenden Komponenten des Ein-Chip-Systems vorausgewertet sind, kann der Angriffsdetektionsregelsatz lediglich Regelungen zur Protokollierung von Ereignissen, mithin zur Informationsfilterung, und/oder zur Maßnahmenauswahl enthalten; denkbar ist es jedoch auch, dass der Angriffsdetektionsregelsatz eine Grundlage für eine Klassifizierung eines Ereignisses als Angriff liefern kann, mithin beispielsweise, gegebenenfalls zusätzlich zu anderweitig abgelegten Zugriffstabellen, erlaubte und nicht erlaubte Ereignisse beschreiben bzw. diesen Angriffsklassen zuordnen kann.

Ferner sei noch im Allgemeinen darauf hingewiesen, dass bevorzugt die Angriffsdetektionseinheit Eingangssignale von allen wichtigen Komponenten des Ein-Chip-Systems, insbesondere von allen Koordinationskomponenten, erhält, sich jedoch die Überwachung des Ein-/Ausgabebetriebs durch Empfangen von Signalen der Ein-/Ausgabe-Steuereinheit als zentral erwiesen hat, nachdem Angriffe zum einen von außen in das Ein-Chip-System erfolgen müssen, zum anderen aber in im Wesentlichen allen Fällen die Angriffe eine Kommunikation nach außerhalb des Ein-Chip-Systems bewirken, so dass die Ein-/Ausgabe (Input/Output, I/O) ein wesentlicher zu überwachender Punkt ist, der mit der erfindungsgemäßen Ausgestaltung in jedem Fall abgegriffen wird.

Wie beschrieben ist es bevorzugt, Eingangssignale von mehreren Komponenten des Ein-Chip-Systems abzufragen bzw. zu empfangen und anhand des Angriffsdetektionsregelsatzes zu analysieren, wozu erfindungsgemäß vorgesehen ist, dass eine weitere Hardware-Signalverbindung der Angriffsdetektionseinheit zu wenigstens einer weiteren Komponente des Ein-Chip-Systems besteht, wobei von dieser empfangene Eingangssignale ebenso bezüglich einer zu protokollierenden und/oder mit wenigstens einer Maßnahme zu beantwortenden Regelverletzung des Angriffsdetektionsregelsatzes ausgewertet werden. Insbesondere werden Eingangssignale über spezielle, zusätzliche Hardware-Signalverbindungen von allen relevante Informationen über Angriffe liefernden Komponenten des Ein-Chip-Systems empfangen.

Erfindungsgemäß ist vorgesehen, dass wenigstens eine weitere Komponente eine Speicherzugriffs-Steuereinheit und/oder die Speichereinheit ist. Speicherbezogene Komponenten stellen einen weiteren, äußerst wichtigen Punkt dar, an dem Angriffe/ ein Eindringen festgestellt werden kann, nachdem, um die Funktion von auf Recheneinheiten bzw. virtuellen Rechenkomponenten ausgeführten Applikationen zu manipulieren, auch der Speicherzugriff zu manipulieren ist, wobei beispielsweise ein Zugriff auf nicht zugeteilte Speicherbereiche erfolgen kann. Dabei ist es erfindungsgemäß vorgesehen, dass die Speicherzugriffs-Steuereinheit ein Speicherzugriffsregister umfasst und/oder die seitens der Speichereinheit erhaltenen Eingangssignale Zugriffe auf insbesondere auf physikalischer Ebene definierte Wächterseiten der Speichereinheit beschreiben. Speicherzugriffsregister definieren, welche Recheneinheit/virtuelle Rechenkomponente auf welche Speicherbereiche zugreifen kann, soll bzw. will. Derartige Speicherzugriffsregister werden auch als "Memory Access Register" - MAR bezeichnet. Entsprechende, ein Speicherzugriffsregister bzw. MAR aufweisende Speicherzugriffs-Steuereinheiten eignen sich besonders als Quelle, um schädliche Intentionen anhand des Zugriffs auf nicht erlaubte Speicherbereiche zu erkennen. Wächterseiten ("guard pages") sind im Stand der Technik grundsätzlich bereits bekannt und stellen bevorzugt auf physikalischer Ebene definierte Speicherbereiche dar, auf die durch keine der Recheneinheiten/virtuellen Rechenkomponenten zugegriffen werden darf, und die üblicherweise zu Recheneinheiten und/oder virtuellen Rechenkomponenten allokierte Speicherbereiche voneinander trennen, um beispielsweise auf einen Overflow gerichtete Angriffe scheitern zu lassen, nachdem durch versuchten Zugriff auf eine Wächterseite üblicherweise ein Funktionsabbruch resultiert. Im Rahmen der vorliegenden Erfindung wird nun vorgeschlagen, seitens der Speichereinheit einen Hardware-Interrupt als Eingangssignal für die Angriffsdetektionseinheit zu erzeugen, wenn versucht wird, auf eine Wächterseite zuzugreifen, mithin dort zu schreiben bzw. zu lesen. Auch solche Signale zeigen also einen nicht zulässigen Zugriff auf Speicher an. Besonders bevorzugt ist es hierbei, wenn Eingangssignale über Hardware-Signalverbindungen sowohl von der Speichereinheit als auch von der Speicherzugriffs-Steuereinheit erhalten werden, da dann ein zweischichtiges Sicherheitssystem entsteht, wobei Eingangssignale der Speicherzugriffs-Steuereinheit schädliche Intentionen anzeigen, Eingangssignale von den Wächterseiten schädlichen erfolgreichen Zugang. Die entsprechenden Reaktionen auf die unterschiedlichen Detektionen können hierbei selbstverständlich unterschiedlich sein.

In diesem Zusammenhang sei noch darauf hingewiesen, dass der Angriffsdetektionsregelsatz bezüglich der Speichereinheit weitergehende Einschränkungen enthalten kann als beispielsweise ein Speicherzugriffsregister bzw. eine Speicherzugriffs-Steuereinheit im Allgemeinen, wobei neben zusätzlich im Angriffsdetektionsregelsatz definierten Zugriffsbeschränkungen auch Arten des Zugriffs analysiert werden können, beispielsweise Beschränkungen der Größe zu schreibender bzw. zu lesender Datenobjekte, Beschränkungen der Inhalte und dergleichen. Es sei darauf hingewiesen, dass ähnliche Angriffsdetektionskriterien des Angriffsdetektionsregelsatzes selbstverständlich auch für weitere Komponenten neben der Speichereinheit und/oder der Speicherzugriffs-Steuereinheit genutzt werden können, insbesondere auch im Hinblick auf die Ein-/Ausgabe-Steuereinheit.

In Weiterbildung der Erfindung kann vorgesehen sein, dass die von der Speicherzugriffs-Steuereinheit erhaltenen Eingangssignale eine Last auf einem die Recheneinheiten und die Speichereinheit verbindenden Speicherbus beschreiben. Eine entsprechende, die Last ("load") eines Speicherbusses beschreibende Eigenschaft kann bevorzugt insbesondere von Speicherzugriffs-Steuereinheiten mit einem Speicherzugriffsregister (MAR) erhalten werden. Liegt beispielsweise eine Recheneinheit bzw. eine virtuelle Rechenkomponente vor, auf der eine Applikation ausgeführt wird, bei der der genaue Zeitablauf bzw. eine möglichst schnelle Reaktion kritisch ist, beispielsweise eine Sicherheitsapplikation in einem Kraftfahrzeug, benötigt diese üblicherweise auch Zugriff auf die Speichereinheit, also das MAR. Es muss sichergestellt werden, dass der Zugang zu den entsprechenden Speicherbereichen der Speichereinheit immer verfügbar ist. Eine schädliche Angriffsapplikation auf einer oder mehreren anderen Recheneinheiten bzw. virtuellen Rechenkomponenten kann versuchen, den Zugriff der zeitkritischen Applikation auf die Speicherbereiche durch DoS-Angriffe ("Denial of Service"), Spoofing und dergleichen zu verhindern, wobei der Speicherbus beispielsweise mit Anfragen geflutet wird.

Die Speicherzugriffs-Steuereinheit und/oder die Angriffsdetektionseinheit können nun so ausgestaltet werden, dass derartige Angriffe detektiert werden können. Im Fall einer Detektion können verschiedene Maßnahmen im Sinne einer "Intrusion Prevention" durchgeführt werden, beispielsweise ein Reset der die Angriffsapplikation durchführenden Recheneinheiten/virtuellen Rechenkomponenten und/oder eine Reduzierung der Taktgeber-Geschwindigkeit als eine weniger drastische Reaktion. Die hier beispielhaft beschriebenen Maßnahmen werden im Rahmen des Ein-Chip-Systems außerhalb der Speicherzugriffs-Steuereinheit (MAR-Einheit) mit dem durch die Angriffsdetektionseinheit realisierten IDS bzw. hier insbesondere IPS (intrusion prevention system) umgesetzt.

In diesem Kontext sei noch darauf hingewiesen, dass es besonders vorteilhaft ist, wenn bei einer teilweisen Implementation der Angriffsdetektion durch Erzeugung entsprechender Eingangssignale für die Angriffsdetektionseinheit innerhalb der Speicherzugriffs-Steuereinheit bevorzugt eine Ausgestaltung gewählt wird, bei der die entsprechende Signalerzeugung für auf die Hardware-Signalverbindung zu gebenden Eingangssignale für die Angriffsdetektionseinheit hardwarecodiert und unveränderbar festgelegt erfolgt, was dies die Sicherheit deutlich erhöht. Bevorzugt ist es jedoch, die Umsetzung größtenteils durch die Angriffsdetektionseinheit und den darin abgelegten Angriffsdetektionsregelsatz zu ermöglichen, da dann, wie im Folgenden noch näher diskutiert werden wird, insbesondere auch eine Implementation aufgrund der deutlichen Trennung des IDS von den Recheneinheiten/virtuellen Rechenkomponenten derart erfolgen kann, dass dynamische Veränderungen möglich sind, beispielsweise eine Veränderung des Angriffsdetektionsregelsatzes.

Eine vorteilhafte Weiterbildung der Erfindung sieht vor, dass wenigstens eine der wenigstens einen weiteren Komponente eine zur Überwachung eines Schattenspeichers vorgesehene Inspektionseinheit ist. Ist die Angriffsdetektionseinheit, wie oben bereits beschrieben, in eine derartige Inspektionseinheit integriert, kann über eine Hardware-Signalverbindung auch eine weitere Inspektionseinheit dennoch mit der Angriffsdetektionseinheit kommunizieren. Derartige Inspektionseinheiten dienen, wie bereits dargelegt wurde, der Detektion von Fehlfunktionen einer insbesondere sicherheitskritischen Applikation durch Überwachung des Schattenspeichers. Über beispielsweise eine Schattenspeicher-Steuereinheit (shadow memory manager - SMM), die an ein Sicherheits-Betriebssystem auf wenigstens einer zur Erfüllung einer Sicherheitsanforderung ausgebildeten Recheneinheit bzw. virtuellen Rechenkomponente verbunden ist, werden Schattenspeicher-Speicherabbilder erzeugt, auf die die von dieser Recheneinheit/virtuellen Rechenkomponente vollkommen unabhängige Inspektionseinheit zugreift. Dies ermöglicht es, den Schattenspeicher und somit die Handlungen im Sicherheits-Betriebssystem der wenigstens einen Recheneinheit bzw. virtuellen Rechenkomponente zu überprüfen und Unstimmigkeiten festzustellen, die zu entsprechenden Eingangssignalen an die Angriffsdetektionseinheit führen können. Eine Kopplung des IDS mit derartigen Inspektionseinheiten ist besonders vorteilhaft, da diese wichtige Quellen für Informationen über Angriffe darstellen.

Wenigstens eine der wenigstens einen weiteren Komponente kann ferner ein Recheneinheiten-Zeitgeber (CPU-Clock) und/oder eine Leistungsmanagementeinheit (Power Management Unit) und/oder eine Interrupt-Steuereinheit (Interrupt Controller) sein, wobei die von diesen stammenden Eingangssignale hinsichtlich einer Auslastung des Ein-Chip-Systems ausgewertet werden. Auch auf diese Weise ist es insbesondere mit besonderem Vorteil möglich, DoS-Attacken zu detektieren, wenn beispielsweise besonders viele Rechenoperationen/-anfragen von wenigstens einer der Recheneinheiten/wenigstens einer virtuellen Rechenkomponente auftreten. In der CPU-Clock kann durch Beobachtung auch festgestellt werden, ob durch einen Angriff ein sogenanntes "tuning" erfolgen soll, beispielsweise eine Erhöhung der Taktgeschwindigkeit. An einer Power Management Unit kann überprüft werden, wie viele Calls von den verschiedenen Recheneinheiten/virtuellen Rechenkomponenten stammen, ein Interrupt-Controller liefert die Information, wie viele Interrupts vorliegen, was insbesondere relevant für die erwähnten DoS-Attacken ist.

Eine zweckmäßige Ausgestaltung sieht ferner vor, dass wenigstens eine der wenigstens einen weiteren Komponente ein Konfigurationsregister für wenigstens einen Teil der Recheneinheiten ist, dessen Eingangssignale auf gemäß dem Angriffsdetektionsregelsatz unzulässige Konfigurationen überprüft wird. Beispielsweise können bestimmte Konfigurationen von Recheneinheiten/virtuellen Rechenkomponenten als nicht erlaubt gekennzeichnet und entsprechend detektiert werden. Weist das Ein-Chip-System auch eine Laufzeit-Überprüfungseinheit auf, kann auch diese eine nützliche weitere Komponente darstellen. Laufzeit-Überprüfungseinheiten ("Runtime Checker") untersuchen hierbei Speicherinhalte, bilden beispielsweise Prüfsummen/Hashwerte und nehmen Statusvergleiche vor, woraus ebenso geeignete Eingangssignale für die Angriffsdetektionseinheit abgeleitet werden können. Bei Ein-Chip-Systemen werden derartige Laufzeit-Überprüfungseinheiten häufig als Hardware umgesetzt und stellen auch verlässliche Quellen dar.

Vorzugsweise kann wenigstens eine der wenigstens einen Komponente eine Debug-Schnittstelle des Ein-Chip-Systems sein oder umfassen. Ein-Chip-Systeme weisen häufig Debug-Schnittstellen auf, über die letztlich Zugriff und Steuergewalt über eine Vielzahl, insbesondere alle, Komponenten des Ein-Chip-Systems erhalten werden kann. Während durchaus vorgesehen sein kann, derartige Debug-Schnittstellen nach Fertigstellung des Ein-Chip-Systems, mithin im späteren Einsatz, zu deaktivieren, können diese durchaus gegebenenfalls durch einen Hardware-Eingriff seitens eines Angreifers wieder hergestellt werden. In solchen Fällen oder dann, wenn die Debug-Schnittstelle nicht deaktiviert wird, stellt sie ein Einfalltor für Angriffe dar, welches vorteilhafterweise durch das IDS, hier konkret die Angriffsdetektionseinheit, überwacht wird.

Bei Ein-Chip-Systemen, die auch ein sogenanntes Garantie-Bit aufweisen, können im Übrigen auch Eingangssignale von einer das Garantie-Bit umfassenden Komponente über eine Hardware-Signalverbindung erhalten werden, nachdem Angriffsereignisse auch dazu führen können, dass das Garantie-Bit "geswitched" wird. Dies ist allerdings üblicherweise ein einmalig auftretender, irreversibler Vorgang, der auch durch Nicht-Angriffsvorgänge ausgelöst werden kann, so dass bevorzugt Eingangssignale einer ein Garantie-Bit umfassenden Komponente gemeinsam mit anderen Eingangssignalen ausgewertet werden, um wenigstens ein Ereignis als einen Angriff zu klassifizieren.

In einer Ausgestaltung kann wenigstens eine der wenigstens einen mittels einer Hardware-Signalverbindung mit der Angriffsdetektionseinheit verbundenen Komponente zur Vorauswertung und/oder Filterung der an die Angriffsdetektionseinheit zu übertragenden Eingangssignale ausgebildet sein. Das bedeutet, ein Teil der Intelligenz des IDS kann bereits innerhalb der Eingangssignale liefernden Komponente realisiert werden, indem beispielsweise nur spezielle Signale an die Angriffsdetektionseinheit weitergeleitet werden, die bereits vorgefiltert sind und/oder Ergebnis einer Vorauswertung sind. Bevorzugt sind diese komponentenseitigen Anteile der Signalverarbeitung unveränderbar in Hardware codiert festgelegt, wofür entsprechende Verfahren im Stand der Technik bereits bekannt sind, um einen manipulativen Angriff bereits an dieser Stelle zu vermeiden. Auf diese Weise kann die Unverfälschtheit der an die Angriffsdetektionseinheit weitergeleiteten Eingangssignale, zumindest solange kein Hardware-Angriff erfolgt, sichergestellt werden.

Zur Erhöhung der Sicherheit kann weiterhin vorgesehen sein, dass der Angriffsdetektionsregelsatz, mithin die erwähnte IDS-Policy, als Hardware unveränderbar festgelegt ist oder in einem gesicherten Verfahren, insbesondere unter Verwendung einer in dem Ein-Chip-System als Hardware unveränderbar codierten geheimen Information, veränderbar ist. Dabei ist es bevorzugt, eine Veränderbarkeit in einem gesicherten Verfahren zu erlauben, nachdem die Angriffsdetektionseinheit, wie dargelegt wurde, bevorzugt ohnehin so ausgebildet ist, dass Recheneinheiten/virtuelle Rechenkomponenten bzw. andere gegebenenfalls manipulierende Komponenten keinerlei manipulativen Zugriff auf die Angriffsdetektionseinheit ausüben können. Durch Hinterlegung einer geheimen, insbesondere auch geteilten, Information und einen bevorzugt getrennten Konfigurationsanschluss für die Angriffsdetektionseinheit besteht die Möglichkeit, in einem gesicherten Verfahren, beispielsweise unter Verwendung von Schlüsseln als geheime Information, den Angriffsdetektionsregelsatz zu aktualisieren bzw. im Allgemeinen anzupassen. Die geheime Information kann dabei als Teil oder speziell verbunden mit der Angriffsdetektionseinheit codiert werden, wobei jedoch auch denkbar ist, eine ohnehin vorgesehene, festgelegte und unveränderbare geheime Information in dem Ein-Chip-System zu nutzen. In einer Alternativausgestaltung kann auch eine einmalige Festlegung des Angriffsdetektionsregelsatzes vorgesehen werden, beispielsweise bei der Produktion des Ein-Chip-Systems und/oder durch einmalige Programmierbarkeit zu einem späteren Zeitpunkt, beispielsweise bei der Herstellung einer Gesamtvorrichtung, insbesondere eines Kraftfahrzeugs, die das Ein-Chip-System enthalten soll. Beispielsweise kann das Ein-Chip-System nach der Festlegung des Angriffsdetektionsregelsatzes durch Techniken wie "fusing" oder dergleichen versiegelt werden.

Zur Protokollierung sind unterschiedliche Ansätze denkbar, die auch in Kombination verwendet werden können. So kann vorgesehen sein, dass die Angriffsdetektionseinheit, insbesondere in Abhängigkeit von dem Angriffsdetektionsregelsatz, zur Protokollierung eines als Angriff klassifizierten Ereignisses in einer internen und/oder einer externen Speichereinrichtung und/oder zur Weitergabe des als Angriff klassifizierten Ereignisses an eine zu dem Ein-Chip-System externe Recheneinrichtung ausgebildet ist. Es ist also zum einen eine interne Protokollierung in einer internen Speichereinrichtung denkbar, welche beispielsweise zu einem späteren Zeitpunkt ausgelesen werden kann, um möglicherweise stattgefundene Angriffe analysieren zu können und Daten zur Verbesserung des Ein-Chip-Systems bzw. der auf ihm genutzten Softwaremittel emitteln zu können. Denkbar und erfindungsgemäß bevorzugt ist es jedoch auch, eine externe Protokollierung mittels einer externen Speichereinrichtung und/oder einer externen Recheneinrichtung vorzunehmen. In diesem Zusammenhang ist es zwar grundsätzlich denkbar, aber weniger bevorzugt, eine eigene Ein-/Ausgabeeinheit für die Angriffsdetektionseinheit vorzusehen, nachdem derartige speziell vorgesehene Ein-/Ausgabeeinheiten platzaufwendig und die Komplexität des Ein-Chip-Systems erhöhend realisiert werden müssen. Daher wird es erfindungsgemäß bevorzugt, wenigstens eine der wenigstens einen auch durch die Recheneinheit nutzbaren Ein-/Ausgabeeinheit einzusetzen. Hierzu können beispielsweise Hardware-Ausgangsleitungen der Angriffsdetektionseinheit zu den Recheneinheiten und/oder der Ein-/Ausgabeeinheit und/oder der Ein-/Ausgabe-Steuereinheit realisiert sein, die bevorzugt unidirektional sind, um einen Zugriff über diese Hardware-Ausgangsleitungen auf die Angriffsdetektionseinheit zu vermeiden. Kommunikation über eine Ein-/Ausgabeeinheit zu einer externen Speichereinrichtung/Recheneinrichtung kann beispielsweise über wenigstens eine der Recheneinheiten erfolgen, wobei bevorzugt bei einer geringen oder eins betragenden Anzahl von Recheneinheiten die sichersten bzw. sicherste Recheneinheiten/Recheneinheit verwendet werden/wird. Mit anderen Worten wird zur Weitergabe nach außen dann eine Recheneinheit angesprochen, die voraussichtlich bei einem Eingriff eher zu einem späteren Zeitpunkt, wenn überhaupt, übernommen werden kann. Zweckmäßig kann es auch sein, die entsprechenden Ausgangssignale zur Weitergabe/Protokollierung eines als Angriff klassifizierten Ereignisses an alle Recheneinheiten des Ein-Chip-Systems weitergegeben werden, da es unwahrscheinlich ist, dass alle diese Recheneinheiten bereits kompromittiert sind, so dass die Weiterleitung des Ausgangssignals über die Ein-/Ausgabeeinheit im Wesentlichen sichergestellt werden kann.

Zweckmäßigerweise kann zur Weitergabe an die externe Recheneinrichtung und/oder die externe Speichereinrichtung eine aus einer Chip-ID-Kennungseinheit auslesbare Chip-ID-Kennung den das als Angriff klassifizierte Ereignis beschreibenden Ereignisdaten, insbesondere also dem Ausgangssignal, hinzugefügt wird. Auf diese Weise kann in der externen Speichereinrichtung/externen Recheneinrichtung auch festgestellt werden, auf welches Ein-Chip-System sich die Ereignisdaten beziehen.

Allgemein ist bei der Auswertung der Eingangssignale bevorzugt, wenn die Angriffsdetektionseinheit bei der Auswertung der Eingangssignale zur Ermittlung von einen Verursacher eines als Angriff klassifizierten Ereignisses und/oder von die Art des Ereignisses beschreibenden Ereignisdaten ausgebildet ist, wobei insbesondere auch den Zeitpunkt des Ereignisses beschreibende Ereignisdaten ermittelt werden. Für ein Ereignis ist es mithin zweckmäßig, im Hinblick auf eine erfolgende Auswertung protokollierter Ereignisse und/oder Ergreifung von Maßnahmen zu wissen, welche Komponente des Ein-Chip-Systems was getan hat, das als zumindest potentieller Angriff klassifiziert wurde. Ist ein Zeitstempel verfügbar, beispielsweise bereits in den Eingangssignalen, bietet es sich an, auch diesen den Ereignisdaten hinzuzufügen. Dabei ist es zweckmäßig, die Angriffsdetektionseinheit selbst nicht mit einem Zeitgeber zu versehen, da dieser mit den restlichen Zeitgebern des Ein-Chip-Systems synchronisiert werden müsste, was einen möglichen Angriffspunkt zu der Angriffsdetektionseinheit darstellen könnte.

Wenn zumindest durch einen Teil der Recheneinheiten sicherheitskritische Applikationen durchgeführt werden müssen, können hierdurch Sicherheitsanforderungen an Komponenten bzw. Teile von Komponenten des Ein-Chip-Systems vorgesehen sein, beispielsweise bei einem Kraftfahrzeug, in dem das Ein-Chip-System Sicherheitsfunktionen und/oder automatische Fahrzeugführungsfunktionen realisieren soll. Derartige Sicherheitsanforderungen äußern sich meistens durch Übereinstimmung mit einem Standard, wobei im Beispiel von Kraftfahrzeugen als eine Gesamtvorrichtung, bei der ein erfindungsgemäßes Ein-Chip-System insbesondere in einem Steuergerät eingesetzt wird, eine derartige Norm als die ISO 26262-Norm gegeben ist, die verschiedene Sicherheitsanforderungen als sogenannte ASIL-Klassen festlegt. Sind nun ein Teil der Komponenten des Ein-Chip-Systems zur Erfüllung einer Sicherheitsanforderung konstruiert, ist diese Sicherheitsanforderung, insbesondere in dem Fall, dass auch Maßnahmen in Reaktion auf als Angriff klassifizierte Ereignisse erfolgen sollen, zumindest teilweise auch auf das IDS, insbesondere also die Angriffsdetektionseinheit, zu übertragen. In diesem Kontext ist es jedoch aufgrund des zur Erfüllung der Sicherheitsanforderung zu betreibenden Aufwands weniger bevorzugt, die gesamte Angriffsdetektionseinheit, mithin auch die Anteile, die sich auf nicht sicherheitskritische Anwendungen/Funktionen beziehen, gemäß der (höchsten) Sicherheitsanforderung auszulegen. Es ist mithin denkbar, dass bei einem Vorliegen einer Sicherheitsanforderung für wenigstens einen Teil der Komponenten des Ein-Chip-Systems eine die Sicherheitsanforderung erfüllende Angriffsdetektionseinheit vorgesehen ist.

In einer bevorzugten Ausgestaltung kann jedoch vorgesehen sein, dass wenigstens zwei Angriffsdetektionseinheiten verwendet werden, von denen wenigstens eine die die Sicherheitsanforderung betreffenden Anteile der Auswertung der Eingangssignale durchführende Angriffsdetektionseinheit die Sicherheitsanforderung erfüllt. Eine Eingangssignale auswertende Angriffsdetektionseinheit eines IDS, insbesondere eines IDPS, kann also "zerlegt" werden, um nur die tatsächlich auf die Sicherheitsanforderung bezogenen Anteile in aufwendigerer Form ebenso die Sicherheitsanforderung erfüllend umzusetzen. Dabei kann beispielsweise eine zertifizierte Umsetzung der die Sicherheitsanforderung erfüllenden Angriffsdetektionseinheit erfolgen.

Die Notwendigkeit der Erfüllung der Sicherheitsanforderungen ist, wie bereits erwähnt, insbesondere dann gegeben, wenn eine Reaktion, mithin eine Maßnahme, für den die Sicherheitsanforderung erfüllenden Teil des Ein-Chip-Systems vorgesehen ist, beispielsweise eine Beendigung und/oder Veränderung einer kompromittierten Applikation. Nachdem entsprechende Anteile des IDS ebenso die Sicherheitsanforderung erfüllend realisiert sind, ergibt sich auch bei Durchführung der Maßnahmen insgesamt die Erfüllung der Sicherheitsanforderung, ohne dass zu viel Aufwand bezüglich anderer Anteile des IDS getrieben werden muss.

Wie bereits erwähnt, ergibt sich bei Durchführung von Schutzmaßnahmen als Maßnahmen bei zumindest einem Teil als Angriff klassifizierter Ereignisse neben der Realisierung eines IDS (Intrusion Detection System) auch die Realisierung eines IPS (Intrusion Prevention System), kombiniert also eines IDPS (Intrusion Detection and Prevention System). In diesem Fall kann also gesagt werden, dass die Angriffsdetektionseinheit zusätzlich als wenigstens eine Schutzmaßnahme bei zumindest einem Teil als Angriff klassifizierter Ereignisse auslösende Angriffspräventionseinheit ausgebildet ist.

In diesem Kontext ist es besonders vorteilhaft, wenn die Schutzmaßnahmen beschreibenden Maßnahmensignale über Hardware-Maßnahmenverbindungen an die von der Maßnahme betroffenen Komponenten des Ein-Chip-Systems und/oder an alle Recheneinheiten und/oder virtuellen Rechenkomponenten übermittelbar sind. Diese Hardware-Maßnahmenverbindungen sind bevorzugt unidirektional von der Angriffsdetektionseinheit zu den entsprechenden Komponenten des Ein-Chip-Systems ausgebildet, um Zugriff von den Komponenten auf die Angriffsdetektionseinheit zu vermeiden. Schutzmaßnahmen können dabei beispielsweise das Abschalten und/oder Resetten von Recheneinheiten und/oder weiteren Komponenten des Ein-Chip-Systems und/oder die Veränderung von Betriebsparametern, beispielsweise von Taktfrequenzen und/oder Zugriffserlaubnissen, umfassen. Auch die Beendigung und der Neustart bestimmter Applikationen sind denkbar.

Neben dem Ein-Chip-System betrifft die vorliegende Erfindung auch ein Verfahren zum Betrieb eines erfindungsgemäßen Ein-Chip-Systems, bei dem von der Angriffsdetektionseinheit erhaltene Eingangssignale zur Klassifizierung von Angriffen entsprechenden Ereignissen unter Verwendung des Angriffsdetektionsregelsatzes ausgewertet werden. Sämtliche Ausführungen bezüglich des erfindungsgemäßen Ein-Chip-Systems lassen sich analog auf das erfindungsgemäße Verfahren übertragen, mit welchen mithin ebenso die bereits genannten Vorteile erhalten werden können.

Schließlich betrifft die Erfindung auch ein Kraftfahrzeug, aufweisend wenigstens ein Steuergerät mit einem erfindungsgemäßen Ein-Chip-System. Insbesondere auf ein Kraftfahrzeug lässt sich ein derartiges Ein-Chip-System leicht übertragen, beispielsweise im Rahmen des Konzepts eines zentralen Fahrerassistenzsystems, wobei Fahrerassistenzfunktionen unterschiedlicher Fahrerassistenzsysteme, für die insbesondere auch unterschiedliche Sicherheitsanforderungen gelten, gemeinsam in einem Steuergerät und somit zumindest teilweise in einem Ein-Chip-System durchzuführen sind. Gerade im Hinblick auf sicherheitskritische Applikationen, die Fahrerassistenzfunktionen realisieren können, innerhalb eines Kraftfahrzeugs ist es äußerst zweckmäßig, ein IDS oder insbesondere ein IDPS zu realisieren. Eine andere Variante, auf die sich die Erfindung anwenden lässt, sind Infotainmentsysteme mit Anteilen, die eine Sicherheitsanforderung, beispielsweise einen ASIL-Standard, erfüllen sollen. Derartige Anteile betreffen beispielsweise Informationen, die von einem Steuergerät stammen, das eine Sicherheitsanforderung erfüllen soll, und die angezeigt werden sollen. Sämtliche Ausführungen bezüglich des Ein-Chip-Systems lassen sich analog auf das erfindungsgemäße Kraftfahrzeug übertragen.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines ersten Ausführungsbeispiels eines erfindungsgemäßen Ein-Chip-Systems,
- Fig. 2: eine abstrahierte Darstellung einer Architektur eines zweiten Ausführungsbeispiels eines Ein-Chip-Systems,
- Fig. 3: eine schematische Darstellung der Architektur eines dritten Ausführungsbeispiels eines Ein-Chip-Systems, und
- Fig. 4: eine Prinzipskizze eines erfindungsgemäßen Kraftfahrzeugs.

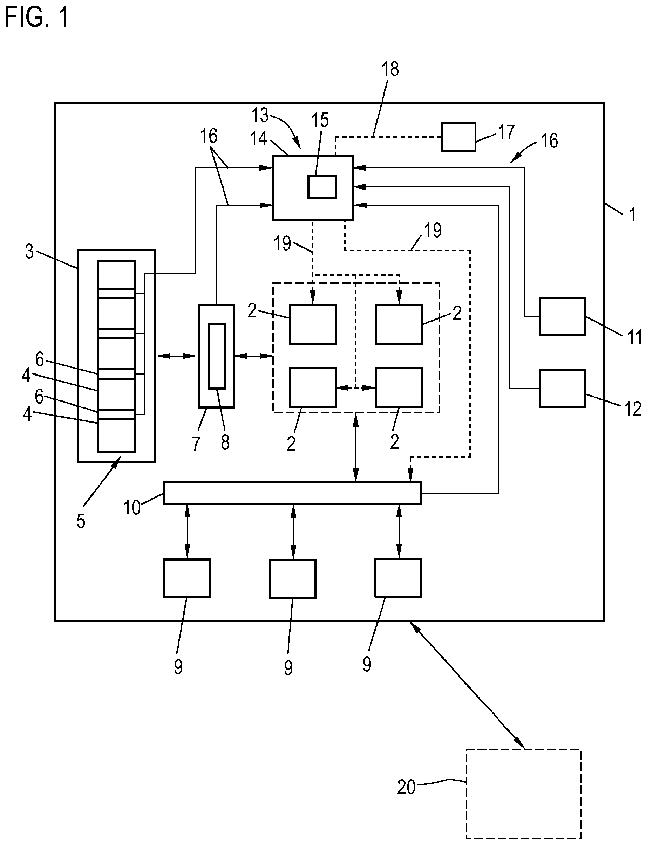

Fig. 1 zeigt eine Prinzipskizze eines erfindungsgemäßen Ein-Chip-Systems 1 (System on Chip - SoC). Das Ein-Chip-System 1 weist vorliegend beispielhaft vier als Rechenkerne ausgebildete Recheneinheiten 2 auf, auf denen verschiedene Betriebssysteme und/oder Applikationen ausgeführt werden können, wobei durchaus mehrere Recheneinheiten 2 einem Betriebssystem/einer Applikation zugeordnet sein können und/oder auch eine teilweise Aufteilung möglich ist, zusammenfassend also virtuelle Rechenkomponenten definiert werden können, beispielsweise durch einen Hypervisor.

Um RAM für die Recheneinheiten 2 bereitzustellen, umfasst das Ein-Chip-System 1 ferner eine Speichereinheit 3, die einen in Speicherbereiche 4 für die Recheneinheiten 2 aufgeteilten Speicherplatz 5 aufweist, wobei die Speicherbereiche 4 jeweils durch Wächterseiten 6 (guard pages) getrennt sind. Der Zugriff der Recheneinheiten 2 auf die Speichereinheit 3 wird durch eine Speicherzugriffs-Steuereinheit 7 koordiniert, die ein entsprechendes Zugriffsregister 8 (Memory Access Register - MAR) umfassen kann. Das Ein-Chip-System 1 umfasst mehrere Ein-/Ausgabeeinheiten 9, die Verbindungen zur Außenwelt herstellen können, beispielsweise eine PCI-Express-Schnittstelle und/oder eine UART-Schnittstelle und/oder eine 12C-Schnittstelle und/oder eine SPI-Schnittstelle und/oder andere Schnittstellen und die zugehörigen Treiber umfassen können.

Auch bezüglich der Ein-/Ausgabe (I/O) ist eine Koordination vorgesehen, vorliegend über eine Ein-/Ausgabe-Steuereinheit 10, in der ebenso ein Zugriffsregister vorliegen kann. Weitere Komponenten des Ein-Chip-Systems umfassen eine Debug-Schnittstelle 11, eine Interrupt-Steuereinheit 12 sowie als weitere, der Übersichtlichkeit halber nicht näher dargestellte Komponenten einen Recheneinheiten-Zeitgeber (CPU-Clock), eine Leistungsmanagementeinheit (Power Management Unit), ein Konfigurationsregister für wenigstens einen Teil der Recheneinheiten 2, ein Garantie-Bit und eine Chip-ID-Kennungseinheit.

Hardwaremäßig integriert weist das Ein-Chip-System 1 ein Angriffsdetektionssystem bzw. IDS 13 auf, welches insbesondere eine im vorliegenden Ausführungsbeispiel als getrennte Hardware realisierte Angriffsdetektionseinheit 14 aufweist, in der ein Angriffsdetektionsregelsatz 15 abgelegt ist, anhand dessen durch Eingangssignale beschriebene Ereignisse als Angriff klassifiziert werden können oder nicht, wobei selbstverständlich auch eine genaue Klassifizierung verschiedener Angriffe bzw. deren Kritikalität möglich ist. Die Angriffsdetektionseinheit 14 erhält die Eingangssignale von verschiedenen Komponenten des Ein-Chip-Systems über Hardware-Signalverbindungen 16, die unidirektional sind. Vorliegend erhält die Angriffsdetektionseinheit 14 Eingangssignale über Hardware-Signalverbindungen 16 wenigstens von der Speichereinheit 3, der Speicherzugriffs-Steuereinheit 7, der Ein-/Ausgabe-Steuereinheit 10, der Debug-Schnittstelle 11 und der Interrupt-Steuereinheit 12. Weitere Quellen für Eingangssignale können der Recheneinheiten-Zeitgeber, die Leistungsmanagementeinheit, das Konfigurationsregister, ein als Hardware realisierter Runtime-Checker und/oder das Garantie-Bit sein.

Die Eingangssignale können als Hardware-Interrupts und dergleichen unmittelbar erzeugt und ungefilterter/unvorausgewertet an die Angriffsdetektionseinheit 14 weitergeleitet werden, um möglichst wenig Angriffsmöglichkeiten zu bieten. Denkbar sind jedoch auch Ausgestaltungen, in denen eine Vorauswertung und/oder Filterung durch eine der Eingangssignale liefernden Komponenten erfolgt. Auf diese Weise wird die Datenlast für die Angriffsdetektionseinheit 14 reduziert und diese kann kleinbauender/weniger komplex realisiert werden.

Der Angriffsdetektionsregelsatz kann unveränderbar in Hardware codiert, also einmalig festgelegt, in der Angriffsdetektionseinheit 14 abgelegt sein, wobei auch eine grundsätzlich veränderbare Ausgestaltung denkbar ist, wobei dann eine geheime, unveränderbar in dem Ein-Chip-System 1 gespeicherte Information, beispielsweise ein Schlüssel, verwendet wird, um eine Authentifizierung bei einer Änderung vorzunehmen.

Der Angriffsdetektionsregelsatz 15 kann Klassifizierungen festlegen, beispielsweise wann und wie kritisch ein Angriff vorliegt, indem er beschreibt, welche Rechte insbesondere die Recheneinheiten 2 und/oder aus diesen gebildete virtuelle Rechenkomponenten haben. Ferner kann der Angriffsdetektionsregelsatz 15 beschreiben, wie mit detektierten Angriffen umgegangen werden soll, was also geschehen soll, wenn wenigstens ein Ereignis als ein Angriff klassifiziert wird. Dabei reichen die Maßnahmen von unterschiedlichen Protokollierungsaktionen bis hin zu möglicherweise vorgesehenen Schutzmaßnahmen, wobei im letzteren Fall die Angriffsdetektionseinheit 14 auch als Angriffspräventionseinheit ausgebildet ist, so dass sich insgesamt ein IDPS 13 ergibt (Intrusion Detection and Prevention System). Eine Protokollierung kann dabei mittels einer internen Speichereinrichtung 17 erfolgen, zu der eine entsprechende Hardware-Ausgangsleitung 18 führt. Denkbar ist es jedoch auch, ein als Angriff kommuniziertes Ereignis beschreibende Ereignisdaten nach außerhalb des Ein-Chip-Systems 1 zu kommunizieren, wozu als weniger bevorzugte Ausgestaltung eine eigene Ein-/Ausgabeeinheit zusätzlich für die Angriffsdetektionseinheit 14 vorgesehen sein kann, was jedoch von der Umsetzung her aufwendig ist, insbesondere wenn aufgrund gegebenenfalls gegebener Zeitkritikalität eine schnelle Verbindung, insbesondere eine Ethernet-Verbindung, genutzt werden soll.

Bevorzugt ist es, wenigstens eine der Ein-/Ausgabeeinheiten 9 zu nutzen, wofür ein entsprechendes Ausgangssignal (Maßnahmensignal bzw. Protokollierungssignal), über unidirektional realisierte Hardware-Maßnahmenverbindungen 19 an alle Recheneinheiten 2, nachdem es unwahrscheinlicher ist, dass alle Recheneinheiten 2 gleichzeitig kompromittiert werden, und/oder an die Ein-/Ausgabe-Steuereinheit 10 versendet werden können. Somit ist es möglich, die Ereignisdaten zur Protokollierung und/oder zur weiteren Verarbeitung, insbesondere auch hinsichtlich von Schutzmaßnahmen, an eine externe Speichereinrichtung und/oder Recheneinrichtung 20 weiterzuleiten. Den Ereignisdaten, die bevorzugt einen Verursacher eines als Angriff klassifizierten Ereignisses, die Art des Ereignisses und einen Zeitpunkt des Ereignisses beschreiben, werden durch eine in der Chip-ID-Kennungseinheit auslesbare Chip-ID-Kennung ergänzt, so dass die externe Speichereinrichtung und/oder Recheneinrichtung 20 eine entsprechende Zuordnung vornehmen kann.

Was die Bewertung der Speicheraktivitäten der Recheneinheiten 2 angeht, kann die Angriffsdetektionseinheit 14 von der Speicherzugriffs-Steuereinheit 7 beispielsweise allgemeine Zugriffsinformationen erhalten, die gegen erlaubte Zugriffsanfragen gemäß dem Angriffsdetektionsregelsatz 15 überprüft werden können. Besonders vorteilhaft zusätzlich werden durch Hardware-Interrupts Zugriffe auf die Wächterseiten 6 überwacht, so dass letztlich eine doppelte Sicherheitsüberprüfung stattfindet.

Ist die Angriffsdetektionseinheit 14 auch als Angriffspräventionseinheit ausgebildet, sind mithin Schutzmaßnahmen vorgesehen, können diese ebenso über die Hardware-Maßnahmenleitungen 19 an entsprechende Komponenten, die die Schutzmaßnahmen durchführen sollen, weitergegeben werden, insbesondere die Recheneinheiten 2. Beispielsweise können interne Zeitgeber der Recheneinheiten 2 umgestellt werden, wenn eine DoS-Attacke vermutet wird, und/oder es können Recheneinheiten und/oder virtuelle Rechenkomponenten resettet und/oder deaktiviert werden. Verschiedenste Schutzmaßnahmen sind mithin, je nach detektiertem Angriff, denkbar.

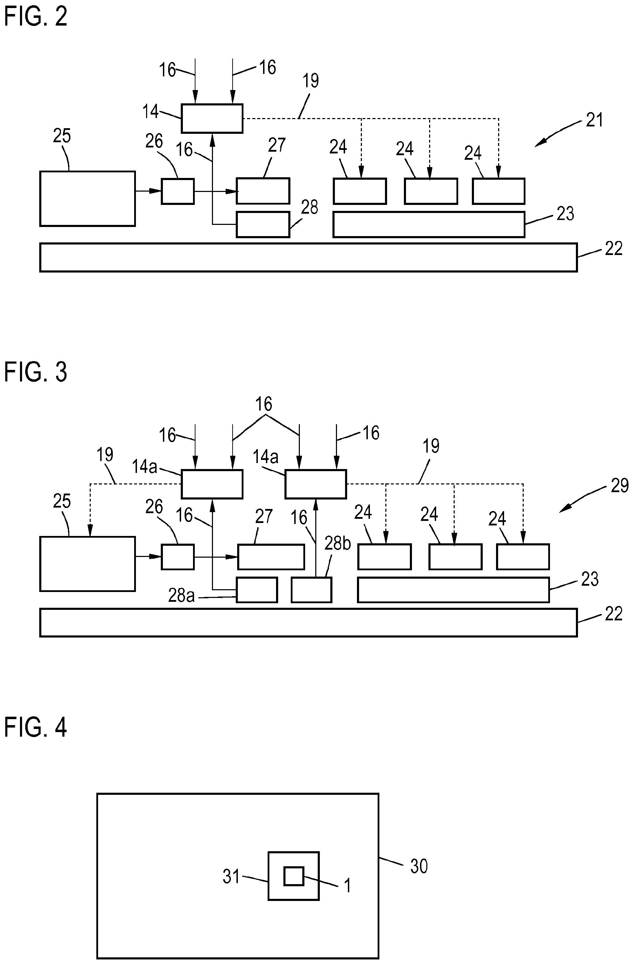

Fig. 2 erläutert strukturell ein zweites Ausführungsbeispiel eines erfindungsgemäßen Ein-Chip-Systems anhand eines dargestellten Ausschnitts 21. Die Angriffsdetektionseinheit 14, wiederum als eigene Hardware realisiert, erhält auch in diesem Ausführungsbeispiel über Hardware-Signalverbindungen 16 Eingangssignale von den bezüglich des ersten Ausführungsbeispiels genannten Komponenten des Ein-Chip-Systems 1.

Im vorliegenden Ausführungsbeispiel sind ausgehend von den physikalischen Komponenten (angedeutet bei 22) durch einen Hypervisor 23 unter Nutzung von ein oder mehreren Recheneinheiten 2 beispielhaft drei virtuelle Rechenkomponenten 24 definiert, die vorliegend geringen Sicherheitsanforderungen genügende Betriebssysteme und Applikationen durchführen. Nachdem der Hypervisor 23 nicht bezüglich eines Sicherheitsstandards zertifiziert ist, ist eine weitere virtuelle Rechenkomponente 25 unter Nutzung anderer Recheneinheiten 2 gebildet, um eine einer höheren Sicherheitsanforderung genügende, sicherheitskritische Applikation durchzuführen, beispielsweise eine Sicherheitsfunktion und/oder Fahrzeugführungsfunktion in einem Kraftfahrzeug. Über eine Schattenspeicher-Steuereinheit 26 wird bei Betrieb der virtuellen Rechenkomponente 25 ein Schattenspeicher 27 beschrieben, dem eine Schattenspeicher-Inspektionseinheit 28 zugeordnet ist, die den Inhalt des Schattenspeichers 27, realisiert als eigene Hardware, insbesondere eigene zusätzliche Recheneinheit, überwacht und prüft, um Fehler, Zugriffsverletzungen und dergleichen feststellen zu können, mithin Angriffe selber zu detektieren oder aber zumindest die Grundlage für eine Angriffsdetektion zu schaffen. Auch die Inspektionseinheit 28 ist über eine Hardware-Signalverbindung 16 mit der Angriffsdetektionseinheit 14 verbunden, um entsprechende Eingangssignale weiterzugeben, die einen erfolgten Angriff anzeigen und/oder zur Detektion eines solchen ausgewertet werden können.

Dabei sei darauf hingewiesen, dass im Ausführungsbeispiel gemäß Fig. 2 Hardware-Maßnahmenverbindungen 19 nicht zu den Recheneinheiten 2 der virtuellen Rechenkomponente 25 geführt sind, nachdem vorliegend die Inspektionseinheit 28 und die Angriffsdetektionseinheit 14 nicht für die Sicherheitsanforderung der virtuellen Rechenkomponente 25 zertifiziert ausgebildet sind. Dies würde sich ändern, wenn die Inspektionseinheit 28 und die Angriffsdetektionseinheit 14 die Sicherheitsanforderung erfüllten, mithin zertifiziert wären, was im Rahmen der vorliegenden Erfindung grundsätzlich denkbar ist, genau wie es grundsätzlich möglich wäre, die Hardware der Inspektionseinheit 28 und der Angriffsdetektionseinheit 14 zu integrieren, beispielsweise eine gemeinsame und zusätzliche Recheneinheit zu nutzen.

Hinsichtlich der Sicherheitsanforderungen ist jedoch eine verbesserte Ausgestaltung mit geringerem Aufwand möglich, wie dies gemäß Fig. 3 in einem dem Ausschnitt 21 entsprechenden Ausschnitt 29 eines dritten Ausführungsbeispiels eines erfindungsgemäßen Ein-Chip-Systems 1 gezeigt ist. Ersichtlich sind hier sowohl die Inspektionseinheit 28 als auch die Angriffsdetektionseinheit 14 in Anteile aufgeteilt, die dem Sicherheitsstandard genügen und solche, die dem Sicherheitsstandard nicht genügen müssen, so dass Inspektionseinheiten 28a und 28b sowie Angriffsdetektionseinheiten 14a und 14b vorliegen. Die Inspektionseinheit 28a ist über eine Hardware-Signalverbindung 16 mit der Inspektionseinheit 14a verbunden, wobei beide den Sicherheitsstandard erfüllen. Die Inspektionseinheit 28b ist über eine Hardware-Signalleitung 16 mit der Angriffsdetektionseinheit 14b verbunden, wobei beide die Sicherheitsanforderungen nicht erfüllen, mithin einfacher und weniger komplex realisiert werden können. Mit anderen Worten sind die sicherheitsrelevanten Anteile des IDS 13 bzw. des IDPS abgetrennt, was es insbesondere aufgrund der nun zertifizierten Angriffsdetektionseinheit 14a auch erlaubt, über eine Hardware-Maßnahmenverbindung 19 Präventionsmaßnahmen an der virtuellen Rechenkomponente 25 vorzunehmen. Es sei angemerkt, dass selbstverständlich auch mehrere virtuelle Rechenkomponenten 25, die der gleichen oder unterschiedlichen Sicherheitsanforderungen genügen können, vorhanden sein können.

Fig. 4 zeigt schließlich eine Prinzipskizze eines erfindungsgemäßen Kraftfahrzeugs 30, welches wenigstens ein Steuergerät 31 aufweist, das ein erfindungsgemäßes Ein-Chip-System 1 umfasst. Es hat sich gezeigt, dass die hier beschriebene Technologie insbesondere für Kraftfahrzeuge, bei denen häufig unterschiedliche Sicherheitsanforderungen/Sicherheitsstandards auch innerhalb eines Steuergeräts 31 vorliegen können, einsetzbar ist.

## Patentansprüche

1. Ein-Chip-System (1), aufweisend mehrere Recheneinheiten (2), insbesondere Rechenkerne und/oder CPUs, wenigstens eine Ein-/Ausgabeeinheit (9), eine Speichereinheit (3) und eine Ein-/Ausgabe-Steuereinheit (10), die die Kommunikation zwischen den Recheneinheiten (2) und der wenigstens einen Ein-/Ausgabeeinheit (9) koordiniert, wobei das Ein-Chip-System (1) ferner eine als Hardware realisierte Angriffsdetektionseinheit (14, 14a, 14b) aufweist, welche über eine Hardware-Signalverbindung (16) wenigstens mit der Ein-/Ausgabe-Steuereinheit (10) als Komponente des Ein-Chip-Systems (1) verbunden ist und von der Ein-/Ausgabe-Steuereinheit (10) empfangene Eingangssignale bezüglich einer zu protokollierenden und/oder mit wenigstens einer Maßnahme zu beantwortenden Regelverletzung eines Angriffsdetektionsregelsatzes (15) auswertet, wobei eine weitere Hardware-Signalverbindung (16) der Angriffsdetektionseinheit (14, 14a, 14b) zu wenigstens einer weiteren Komponente des Ein-Chip-Systems (1) besteht, wobei von dieser empfangene Eingangssignale ebenso bezüglich einer zu protokollierenden und/oder mit wenigstens einer Maßnahme zu beantwortenden Regelverletzung des Angriffsdetektionsregelsatzes (15) ausgewertet werden, wobei wenigstens eine weitere Komponente eine ein Speicherzugriffsregister (8) umfassende Speicherzugriffs-Steuereinheit (7) und/oder die Speichereinheit (3), wobei die seitens der Speichereinheit (3) erhaltenen Eingangssignale Zugriffe auf insbesondere auf physikalischer Ebene definierte Wächterseiten (6) der Speichereinheit (3) beschreiben, ist.

2. Ein-Chip-System nach Anspruch 1,
**dadurch gekennzeichnet,**
**dass** die Angriffsdetektionseinheit (14, 14a, 14b) als eine eigene Hardwarekomponente des Ein-Chip-Systems (1) und/oder als Teil einer zur Überwachung einer Komponente, insbesondere einer Recheneinheit (2) und/oder einer virtuellen Rechenkomponente (24, 25), des Ein-Chip-Systems (1) vorgesehenen, als Zusatzrecheneinheit realisierten, insbesondere einen Schattenspeicher (27) analysierenden Inspektionseinheit (28, 28a, 28b) realisiert ist.

3. Ein-Chip-System nach Anspruch 1 oder 2,
**dadurch gekennzeichnet,**
**dass** die von der Speicherzugriffs-Steuereinheit (7) erhaltenen Eingangssignale eine Last auf einem die Recheneinheiten (2) und die Speichereinheit (3) verbindenden Speicherbus beschreiben.

4. Ein-Chip-System nach einem der vorangehenden Ansprüche,
**dadurch gekennzeichnet,**
**dass** wenigstens eine der wenigstens einen weiteren Komponente eine zur Überwachung eines Schattenspeichers (27) vorgesehene Inspektionseinheit (28, 28a, 28b) ist.

5. Ein-Chip-System nach einem der vorangehenden Ansprüche,
**dadurch gekennzeichnet,**
**dass** wenigstens eine der wenigstens einen weiteren Komponente ein Recheneinheiten (2)-Zeitgeber und/oder eine Leistungsmanagementeinheit [und/oder eine Interrupt-Steuereinheit (12) ist, wobei die von diesen stammenden Eingangssignale hinsichtlich einer Auslastung des Ein-Chip-Systems (1) ausgewertet werden, und/oder dass wenigstens eine der wenigstens einen weitere Komponente ein Konfigurationsregister für wenigstens einen Teil der Recheneinheiten (2) ist, dessen Eingangssignale auf gemäß dem Angriffsdetektionsregelsatz (15) unzulässige Konfigurationen überprüft wird.

6. Ein-Chip-System nach einem der vorangehenden Ansprüche,
**dadurch gekennzeichnet,**
**dass** wenigstens eine der wenigstens einen Komponente eine Debug-Schnittstelle (11) des Ein-Chip-Systems (1) ist oder umfasst.

7. Ein-Chip-System nach einem der vorangehenden Ansprüche,
**dadurch gekennzeichnet,**
**dass** wenigstens eine der wenigstens einen mittels einer Hardware-Signalverbindung (16) mit der Angriffsdetektionseinheit (14, 14a, 14b) verbundenen Komponente zur Vorauswertung und/oder Filterung der an die Angriffsdetektionseinheit (14, 14a, 14b) zu übertragenden Eingangssignale ausgebildet ist.

8. Ein-Chip-System nach einem der vorangehenden Ansprüche,
**dadurch gekennzeichnet,**
**dass** der Angriffsdetektionsregelsatz (15) als Hardware unveränderbar festgelegt ist oder in einem gesicherten Verfahren, insbesondere unter Verwendung einer in dem Ein-Chip-System (1) als Hardware unveränderbar codierten geheimen Information, veränderbar ist.

9. Ein-Chip-System nach einem der vorangehenden Ansprüche,
**dadurch gekennzeichnet,**
**dass** die Angriffsdetektionseinheit (14, 14a, 14b), insbesondere in Abhängigkeit von dem Angriffsdetektionsregelsatz (15), zur Protokollierung eines als Angriff klassifizierten Ereignisses in einer internen und/oder einer externen Speichereinrichtung (17, 20) und/oder zur Weitergabe des als Angriff klassifizierten Ereignisses an eine zu dem Ein-Chip-System (1) externe Recheneinrichtung (20) ausgebildet ist.

10. Ein-Chip-System nach Anspruch 9,
**dadurch gekennzeichnet,**
**dass** zur Weitergabe an die externe Recheneinrichtung eine aus einer Chip-ID-Kennungseinheit auslesbare Chip-ID-Kennung den das als Angriff klassifizierte Ereignis beschreibenden Ereignisdaten hinzugefügt wird und/oder wenigstens eine der wenigstens einen auch durch die Recheneinheiten (2) nutzbaren Ein-/Ausgabeeinheit (9) genutzt wird.

11. Ein-Chip-System nach einem der vorangehenden Ansprüche,
**dadurch gekennzeichnet,**
**dass** die Angriffsdetektionseinheit (14, 14a, 14b) bei der Auswertung der Eingangssignale zur Ermittlung von einen Verursacher eines als Angriff klassifizierten Ereignisses und/oder von die Art des Ereignisses beschreibenden Ereignisdaten ausgebildet ist, wobei insbesondere auch den Zeitpunkt des Ereignisses beschreibende Ereignisdaten ermittelt werden.

12. Ein-Chip-System nach einem der vorangehenden Ansprüche,
**dadurch gekennzeichnet,**
**dass** bei einem Vorliegen einer Sicherheitsanforderung für wenigstens einen Teil der Komponenten des Ein-Chip-Systems (1) eine die Sicherheitsanforderung erfüllende Angriffsdetektionseinheit (14, 14a, 14b) vorgesehen ist und/oder wenigstens zwei Angriffsdetektionseinheiten (14, 14a, 14b) verwendet werden, von denen wenigstens eine die die Sicherheitsanforderung betreffenden Anteile der Auswertung der Eingangssignale durchführende Angriffsdetektionseinheit (14, 14a, 14b) die Sicherheitsanforderung erfüllt.

13. Ein-Chip-System nach einem der vorangehenden Ansprüche,
**dadurch gekennzeichnet,**
**dass** die Angriffsdetektionseinheit (14, 14a, 14b) zusätzlich als wenigstens eine Schutzmaßnahme bei zumindest einem Teil als Angriff klassifizierter Ereignisse auslösende Angriffspräventionseinheit ausgebildet ist, wobei die Schutzmaßnahmen beschreibenden Maßnahmensignale über Hardware-Maßnahmenverbindungen (19) an die von der Maßnahme betroffenen Komponenten des Ein-Chip-Systems (1) und/oder an alle Recheneinheiten (2) und/oder virtuellen Rechenkomponenten (24, 25) übermittelbar sind.

14. Verfahren zum Betrieb eines Ein-Chip-Systems (1), wobei der Betrieb all die in einem der vorangehenden Ansprüche beschriebenen Funktionen des Ein-Chip Systems beinhaltet, **dadurch gekennzeichnet, dass** von der Angriffsdetektionseinheit (14, 14a, 14b) erhaltene Eingangssignale zur Klassifizierung von Angriffen entsprechenden Ereignissen unter Verwendung des Angriffsdetektionsregelsatzes (15) ausgewertet werden.

15. Kraftfahrzeug (30), aufweisend wenigstens ein Steuergerät (31) mit einem Ein-Chip-System (1) nach einem der Ansprüche 1 bis 13.

## Claims

1. System on chip (1), having multiple computing units (2), in particular computer cores and/or CPUs, at least one input/output unit (9), a memory unit (3) and an input/output control unit (10) that coordinates the communication between the computing units (2) and the at least one input/output unit (9), wherein the system on chip (1) further has an attack detection unit (14, 14a, 14b), produced as hardware, that is connected by means of a hardware signal connection (16) to at least the input/output control unit (10) as a component of the system on chip (1) and evaluates input signals received from the input/output control unit (10) for a rule infringement in a set of attack detection rules (15), which rule infringement needs to be logged and/or responded to with at least one measure, wherein there is a further hardware signal connection (16) of the attack detection unit (14, 14a, 14b) to at least one further component of the system on chip (1), wherein input signals received from this are also evaluated with regard to a rule infringement in a set of attack detection rules (15), which rule infringement needs to be logged and/or responded to with at least one measure, wherein at least one further component is a memory access control unit (7) comprising a memory access register (8) and/or is the memory unit (3), wherein the input signals received by the memory unit (3) describe accesses to guard pages (6) of the memory unit (3), which are defined in particular on a physical level.

2. System on chip according to claim 1,
**characterised in that**
the attack detection unit (14, 14a, 14b) is implemented as a separate hardware component of the system on chip (1) and/or as part of an inspection unit (28, 28a, 28b), which in particular analyses a shadow memory (27), is implemented as an additional computing unit, and is provided for monitoring a component, in particular a computing unit (2) and/or a virtual computing component (24, 25), of the system on chip (1).

3. System on chip according to claim 1 or 2,
**characterised in that**
the input signals received from the memory access control unit (7) describe a load on a memory bus connecting the computing units (2) and the memory unit (3).

4. System on chip according to any one of the preceding claims,
**characterised in that**
at least one of the at least one further component is an inspection unit (28, 28a, 28b) provided for monitoring a shadow memory (27).

5. System on chip according to any one of the preceding claims,
**characterised in that**
at least one of the at least one further component is a computing unit (2) timer and/or a power management unit and/or an interrupt control unit (12), wherein the input signals originating from these are evaluated with regard to the utilisation of the system on chip (1), and/or **in that** at least one of the at least one further component is a configuration register for at least some of the computing units (2), whose input signals is checked for configurations which are illegal according to the set of attack detection rules (15).

6. System on chip according to any one of the preceding claims,
**characterised in that**
at least one of the at least one component is or comprises a debug interface (11) of the system on chip (1).

7. System on chip according to any one of the preceding claims,
**characterised in that**
at least one of the at least one component connected to the attack detection unit (14, 14a, 14b) by means of a hardware signal connection (16) is designed to pre-evaluate and/or filter the input signals to be transmitted to the attack detection unit (14, 14a, 14b).

8. System on chip according to any one of the preceding claims,
**characterised in that**
the set of attack detection rules (15) is fixed unchangeably as hardware or can be changed in a secure method, in particular using secret information that is unchangeably coded as hardware in the system on chip (1).

9. System on chip according to any one of the preceding claims,
**characterised in that**
the attack detection unit (14, 14a, 14b) is designed, in particular as a function of the set of attack detection rules (15), to log an event classified as an attack in an internal and/or an external storage apparatus (17, 20) and/or to forward the event classified as an attack to a computing apparatus (20) external to the system on chip (1).

10. System on chip according to claim 9,
**characterised in that**
a chip ID identifier that can be read out from a chip ID identifier unit is added to the event data describing the event classified as an attack for forwarding to the external computing apparatus, and/or at least one of the at least one input/output units (9) which can also be used by the computing units (2) is used.

11. System on chip according to any one of the preceding claims,
**characterised in that**
the attack detection unit (14, 14a, 14b) is designed to determine, during the evaluation of the input signals, a cause of an event classified as an attack and/or event data describing the type of event, whereby in particular, event data describing the time of the event are also determined.

12. System on chip according to any one of the preceding claims,
**characterised in that**
if a security requirement is present for at least some of the components of the system on chip (1), an attack detection unit (14, 14a, 14b) fulfilling the security requirement is provided and/or at least two attack detection units (14, 14a, 14b) are used, of which at least one attack detection unit (14, 14a, 14b), which carries out the portions of the evaluation of the input signals that relate to the security requirement, fulfils the security requirement.

13. System on chip according to any one of the preceding claims,
**characterised in that**
the attack detection unit (14, 14a, 14b) is additionally designed as an attack prevention unit that triggers at least one protective measure in the case of at least some of the events classified as an attack, wherein measure signals describing the protective measures can be transmitted via hardware measure connections (19) to the components of the system on chip (1) affected by the measure and/or to all computing units (2) and/or virtual computing components (24, 25).

14. Method for operating a system on chip (1), wherein the operation includes all the functions of the system on chip described in any one of the preceding claims, **characterised in that** input signals received from the attack detection unit (14, 14a, 14b) for classifying events corresponding to attacks are evaluated using the set of attack detection rules (15).

15. Motor vehicle (30) having at least one control device (31) with a system on chip (1) according to any one of claims 1 to 13.

## Revendications

1. Système monopuce (1) présentant plusieurs unités de calcul (2), en particulier des noyaux de calcul et/ou des unités centrales de traitement, au moins une unité d'entrée/sortie (9), une unité de mémoire (3) et une unité de commande d'entrée/sortie (10) qui coordonne la communication entre les unités de calcul (2) et la au moins une unité d'entrée/sortie (9), dans lequel le système monopuce (1) présente en outre une unité de détection d'attaque (14, 14a, 14b) réalisée sous forme matérielle, laquelle est connectée par l'intermédiaire d'une liaison par signal matérielle (16) avec au moins l'unité de commande d'entrée/sortie (10) comme composant du système monopuce (1) et évalue des signaux d'entrée reçus par l'unité de commande d'entrée/sortie (10) en ce qui concerne une infraction aux règles d'un ensemble de règles de détection d'attaque (15) à protocoliser et/ou à laquelle il faut répondre par au moins une mesure, dans lequel une autre liaison par signal matérielle (16) de l'unité de détection d'attaque (14, 14a, 14b) avec au moins un autre composant du système monopuce (1) existe, dans lequel des signaux d'entrée reçus par ce sont pareillement évalués en ce qui concerne une infraction aux règles de l'ensemble de règles de détection d'attaque (15) à protocoliser et/ou à laquelle il faut répondre par au moins une mesure, dans lequel au moins un autre composant est une unité de commande d'accès à la mémoire (7) contenant un registre d'accès à la mémoire (8) et/ou l'unité de mémoire (3), dans lequel les signaux d'entrée reçus de la part de l'unité de mémoire (3) décrivent des accès en particulier à des pages de contrôleur (6) de l'unité de mémoire (3) définies au niveau physique.

2. Système monopuce selon la revendication 1, **caractérisé en ce que** l'unité de détection d'attaque (14, 14a, 14b) est réalisée comme un composant matériel propre du système monopuce (1) et/ou comme partie d'une unité d'inspection (28, 28a, 28b) prévue pour surveiller un composant, en particulier une unité de calcul (2) et/ou un composant de calcul virtuel (24, 25) du système monopuce (1), réalisée sous la forme d'une unité de calcul supplémentaire, en particulier analysant une mémoire de recopie (27).

3. Système monopuce selon la revendication 1 ou 2, **caractérisé en ce que** les signaux d'entrée reçus par l'unité de commande d'accès à la mémoire (7) décrivent une charge sur un bus de mémoire reliant les unités de calcul (2) et l'unité de mémoire (3).

4. Système monopuce selon l'une des revendications précédentes, **caractérisé en ce qu'**au moins un du au moins un autre composant est une unité d'inspection (28, 28a, 28b) prévue pour surveiller une mémoire de recopie (27).

5. Système monopuce selon l'une des revendications précédentes, **caractérisé en ce qu'**au moins un du au moins un autre composant est une horloge d'unités de calcul (2) et/ou une unité de gestion de puissance et/ou une unité de commande d'interruption (12), selon lequel les signaux d'entrée provenant de celles-ci sont évalués en ce qui concerne une charge du système monopuce (1) et/ou **en ce qu'**au moins un du au moins un autre composant est un registre de configuration pour au moins une partie des unités de calcul (2), dont les signaux d'entrée est examiné quant à des configurations illicites selon l'ensemble de règles de détection d'attaque (15).

6. Système monopuce selon l'une des revendications précédentes, **caractérisé en ce qu'**au moins un du au moins un composant est ou comprend une interface de débogage (11) du système monopuce (1).

7. Système monopuce selon l'une des revendications précédentes, **caractérisé en ce qu'**au moins un du au moins un composant connecté à l'unité de détection d'attaque (14, 14a, 14b) au moyen d'une liaison par signal matérielle (16) est configuré pour évaluer préalablement et/ou filtrer les signaux d'entrée à transmettre à l'unité de détection d'attaque (14, 14a, 14b).

8. Système monopuce selon l'une des revendications précédentes, **caractérisé en ce que** l'ensemble de règles de détection d'attaque (15) est fixé de manière non modifiable sous forme matérielle ou est modifiable dans un procédé protégé, en particulier à l'aide d'une information secrète codée non modifiable sous forme matérielle dans le système monopuce (1).

9. Système monopuce selon l'une des revendications précédentes, **caractérisé en ce que** l'unité de détection d'attaque (14, 14a, 14b), en particulier en fonction de l'ensemble de règles de détection d'attaque (15), est configurée pour protocoliser un événement classé comme attaque dans un dispositif de stockage interne et/ou externe (17, 20), et/ou pour transmettre l'événement classé comme attaque à un dispositif de calcul (20) externe au système monopuce (1).

10. Système monopuce selon la revendication 9, **caractérisé en ce que**, en vue de la transmission au dispositif de calcul externe, un marquage d'identification de puce lisible à partir d'une unité de marquage d'identification de puce est ajouté aux données d'événement décrivant l'événement classé comme attaque et/ou au moins une de la au moins une unité d'entrée/sortie (9) également utilisable par les unités de calcul (2) est utilisée.

11. Système monopuce selon l'une des revendications précédentes, **caractérisé en ce que** l'unité de détection d'attaque (14, 14a, 14b) est configurée, lors de l'évaluation des signaux d'entrée, pour rechercher un responsable d'un événement classé comme attaque et/ou des données d'événement décrivant le type de l'événement, selon lequel, en particulier, des données d'événement décrivant le moment de l'événement sont également recherchées.

12. Système monopuce selon l'une des revendications précédentes, **caractérisé en ce que**, lorsqu'une exigence de sécurité pour au moins une partie des composants du système monopuce (1) existe, une unité de détection d'attaque (14, 14a, 14b) satisfaisant à l'exigence de sécurité est prévue et/ou au moins deux unités de détection d'attaque (14, 14a, 14b) sont utilisées, dont au moins une unité de détection d'attaque (14, 14a, 14b) effectuant les parties de l'évaluation des signaux d'entrée concernant l'exigence de sécurité satisfait à l'exigence de sécurité.

13. Système monopuce selon l'une des revendications précédentes, **caractérisé en ce que** l'unité de détection d'attaque (14, 14a, 14b) est en outre configurée comme une unité de prévention d'attaque déclenchant au moins une mesure de protection lors d'au moins une partie d'événements classés comme attaques, selon lequel les signaux de mesure décrivant des mesures de protection sont transmissibles aux composants du système monopuce (1) concernés par la mesure et/ou à toutes les unités de calcul (2) et/ou composants de calcul virtuels (24, 25) par l'intermédiaire de liaisons de mesures matérielles (19).

14. Procédé pour faire fonctionner un système monopuce (1), selon lequel le fonctionnement inclut toutes les fonctions du système monopuce décrites dans l'une des revendications précédentes, **caractérisé en ce que** des signaux d'entrée reçus par l'unité de détection d'attaque (14, 14a, 14b) sont évalués pour classer des événements correspondant à des attaques en utilisant l'ensemble de règles de détection d'attaque (15).

15. Véhicule automobile (30) présentant au moins un dispositif de commande (31) avec un système monopuce (1) selon l'une des revendications 1 à 13.
